**Europäisches Patentamt**

**European Patent Office**

**Office européen des brevets**

(19)

(11) Publication number: **0 209 091**
**B1**

## (12) EUROPEAN PATENT SPECIFICATION

(45) Date of publication of the patent specification:
**07.03.90**

(21) Application number: **86109513.1**

(22) Date of filing: **11.07.86**

(51) Int. Cl.⁴: **H02K 3/12, H02K 3/28,**
**H02K 15/04, H02K 15/06**

(54) A method of manufacturing an armature of an a.c. generator for a car.

(30) Priority: **15.07.85 JP 156580/85**

(43) Date of publication of application:
**21.01.87 Bulletin 87/4**

(45) Publication of the grant of the patent:
**07.03.90 Bulletin 90/10**

(84) Designated Contracting States:
**DE FR GB**

(56) References cited:
**DE-A- 1 563 094**
**DE-A- 2 011 201**
**DE-A- 2 731 295**
**DE-A- 2 921 114**
**GB-A- 2 076 710**
**GB-A- 2 150 053**
**US-A- 4 426 771**

**PATENT ABSTRACTS OF JAPAN, vol. 5,**
**no. 137 (E-72)[809], 29th August 1981; & JP - A**
**- 56 71456 (HITACHI) 15-06-1981**

(73) Proprietor: **MITSUBISHI DENKI KABUSHIKI KAISHA, 2-3,**
**Marunouchi 2-chome Chiyoda-ku, Tokyo 100(JP)**

(72) Inventor: **Taji, Ryoichi, 2-3, Marunouchi 2-chome,**
**Chiyoda-ku Tokyo(JP)**
Inventor: **Imori, Hideo, 2-3, Marunouchi 2-chome,**
**Chiyoda-ku Tokyo(JP)**

(74) Representative: **Liesegang, Roland, Dr.-Ing.,**
**FORRESTER & BOEHMERT**
**Widenmayerstrasse 4 Postfach 22 01 37,**
**D-8000 München 22(DE)**

## Description

The present invention relates to a method of manufacturing an armature of an a.c. generator for a car.

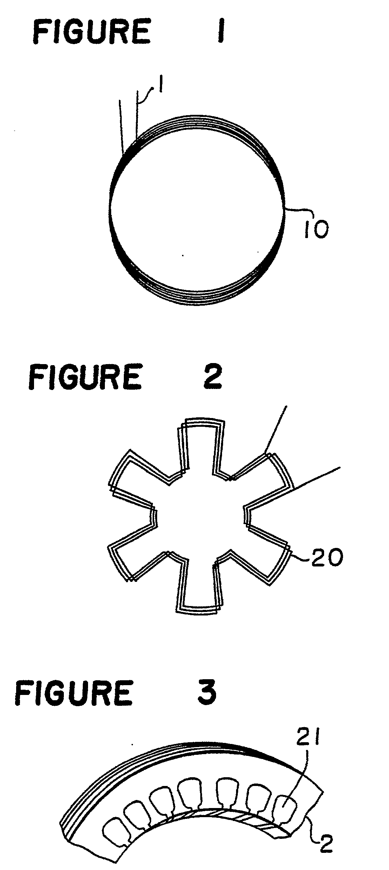

Figures 1 and 2 show steps of a conventional method of manufacturing the armature and Figure 8 shows an important part of the conventional armature.

In the figures, a reference numeral 1 designates a coil element; a numeral 10 designates a coil unit formed by winding in a circular form the coil element 1 in the number of turns required to form a single phase; and a numeral 20 designates a coil member formed by shaping the coil unit by using a shaping machine (not shown) into a ring form in which a plurality of raising and sinking portion are alternately formed in the radial direction.

Figure 3 shows a stator core 2 provided with a number of slots 21.

Figure 8 shows a part of a stator assembly 30, in a developed form, of the conventional armature, in which the coil members 20 are fitted in the slots of the stator core 2. A numeral 31 designates coil ends.

In the conventional armature for the a.c. generator, the stator assembly 30 is formed by inserting each portion of the coil member 20 extending in the radial direction in each of the slots 21 of the stator core 2. In this case, coil ends 31 leading out from one slot are bundled together and have the same direction to be introduced into another slot. Accordingly, when the coil member 20 is inserted in the slots 21 of the stator core 2 at a high occupation rate, it is difficult to insert the coil member 20 without increasing the height of projection of the coil ends 31 beyond a side surface of the stator core 2. Further, since the coil member constitutes a single phase, cooling property of the coil ends 31 is deteriorated.

DE-A 2 921 114 discloses a method for manufacturing an electric generator, in which the coil member is splitted into two parts which are inserted into the slots, whereupon a winding operation is done and finally connection of the coil parts is made.

US-A 4 426 771 teaches to build auxiliary winding coils and to form layered coil insertion patterns; the different patterns are provided in a manner displaced to one another on the stator.

In DE-A 2 731 295 there is disclosed a winding for electrical engines, generators and transformators providing standard plates, which plates are displaced to one another.

It is an object of the present invention to provide a simple method of manufacturing an armature for an a.c. generator for a car which has coil ends of a small height projecting beyond a side surface of the stator core even if the occupation rate of the stator coil is increased with respect to the slots of the stator core, and has good cooling properties.

According to the invention the object is solved by a method according to claim 1.

In the drawings;

Figures 1 and 2 are diagrams showing steps of manufacturing a coil member in a conventional method;

Figure 3 is a perspective view partly broken of a typical stator core;

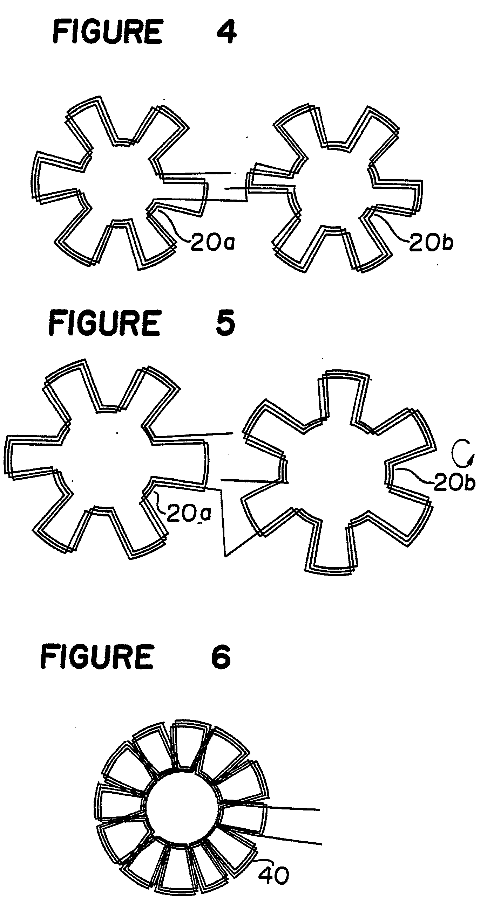

Figures 4 and 5 respectively diagrams showing steps of manufacturing a stator coil according to an embodiment of the present invention;

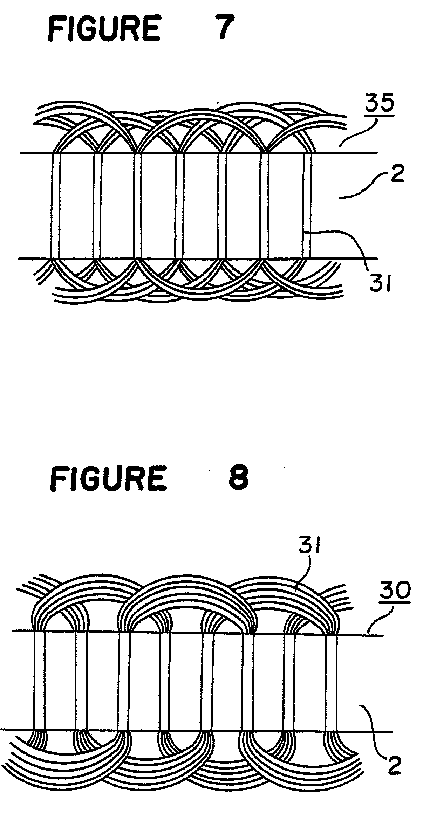

Figure 6 is a plane view of a stator coil formed by the steps shown in Figures 4 and 5;

Figure 7 is a diagram in a developed form of an embodiment of the armature for an a.c. generator for a car according to the present invention; and

Figure 8 is a diagram in a developed form of a conventional armature.

An embodiment of the present invention will be described wherein the same reference numerals designate the same or corresponding parts.

Figure 4 shows splitted coil members 20a, 20b formed by splitting the coil member 20 at substantially the same proportion rate.

Figure 5 shows a state that the splitted coil member 20b is 180° reversed in the same plane where the splitted coils 20a, 20b in Figure 4 are placed.

Figure 6 shows a stator coil formed by overlapping the both splitted coils 20a, 20b as shown in Figure 5 so that the raising portions of the splitted coil 20a correspond to the sinking portions of the splitted coil 20b.

Figure 7 is a diagram showing a stator assembly 35 formed by inserting the stator coil as shown in Figure 6 in the slots 21 of the stator core 2.

The armature of the present invention is manufactured as follows.

First of all, a single phase coil unit 10 is formed by winding in a ring form the coil element 1 in a requisite number of turns. The coil unit 10 is subjected to a shaping operation by using a shaping machine (not shown) to form a star-like coil member 20 as shown in Figure 2. Then, according to Figure 4, the star-like coil member 20 is splitted into two splitted coils 20a, 20b in substantially the same proportion while the both splitted coils 20a, 20b are electrically connected. The splitted coil 20b is 180° reversed in the same plane as shown in Figure 5, and thereafter, the reversed coil 20b is overlaid on the splitted coil 20a so that each of the raised portions of the splitted coil 20b corresponds each of the sinking portions of the splitted coil 20a. Thus, a stator coil 40 as shown in Figure 6 is obtainable.

The stator coil 40 is subjected to regulation of shape so that inner and outer circles formed by coil ends have substantially same center. The shape regulating operation provides easy insertion of the stator coil 40 into the slots 21 of the stator core 2.

In order to form a three phase a.c. generator, the other two stator coils 40 are formed and inserted in the slots of the stator core 2 in the same manner as described above. Thus, the armature as shown in Figure 7 can be obtained.

Description has been made as to the coil member 20 formed in a star-shape and splitted into two parts. The splitted coils 20a, 20b may be formed by splitting a ringed coil unit 10 into two parts, which follow by forming the splitted ringed coil parts to have a star-shape so that each of the raising portions of one splitted part corresponds to each of the sinking portions of the other splitted part.

In the armature obtained by the present invention, about the portion of the coil elements of the stator coil, extending from the slots is divided into two parts, which are received in different slots. Accordingly, even when the stator coil is inserted in the slots at a high occupation rate, an inserting operation can be easy while the height of the coil ends can be reduced. Further, the coil ends can be effectively cooled.

## Claims

1. A method of manufacturing an armature of an a.c. generator for a car, characterized in that a stator coil is formed by shaping a coil element (19) in a multi-wound ringshape, in which a number of raising and sinking portions are alternately formed in the radial direction; said stator coil is splitted into two multi-wound ring-shape stator coils (20a, 20b) with electrical connection between them; either one of said two multi-wound ring-shape stator coils is 180° reversed; the two splitted stator coils (20a, 20b) are overlapped so that each of the raising portions of either of said splitted stator coils corresponds to each of the sinking portions of the other splitted stator coils; and said splitted stator coils are fitted into slots (21) formed in a stator core (2).

2. A method of manufacturing an armature of an a.c. generator for a car according to claim 1, characterized in that radially extending portions of the two splitted coils (20a, 20b) of the coil element are arranged in said slots such that parts constituting the coil ends and extending from the same slots, are not mutually overlapped but are directed circumferentially in opposite directions.

## Patentansprüche

1. Verfahren zum Herstellen des Ankers eines Wechselstromgenerators für ein Kraftfahrzeug, dadurch gekennzeichnet, daß eine Statorwicklung durch Formen eines Wickelelementes (10) in vielfach gewundene Ringgestalt gebildet wird, wobei eine Anzahl von in radialer Richtung "steigenden" und "sinkenden" Abschnitten abwechselnd geformt werden; daß die Statorwicklung in zwei vielfach gewundene, ringgestaltförmige Statorwicklungen (20a, 20b) mit elektrischer Verbindung zwischen ihnen aufgesplittet werden; daß eine der beiden vielfach gewundenen, ringgestaltförmigen Statorwicklungen um 180° gewendet wird, daß die beiden aufgesplitteten Statorwicklungen (20a, 20b) überlappend so aufeinandergelegt werden, daß je die ansteigenden Abschnitte der einen Statorwicklung über den sinkenden Abschnitten der anderen Statorwicklung zu liegen kommen; und daß die aufgesplitteten Statorwicklungen in Schlitze (21) in einem Statorkern (2) eingepaßt werden.

2. Verfahren zum Herstellen eines Ankers eines Wechselstromgenerators für ein Fahrzeug nach Anspruch 1, dadurch gekennzeichnet, daß die radial sich erstreckenden Abschnitte der beiden aufgesplitteten Wicklungen (20a, 20b) des Spulenelementes so in den Schlitzen angeordnet werden, daß die die Spulenenden bildenden Abschnitte, die aus den gleichen Schlitzen vorragen, nicht gegenseitig überlappend liegen, sondern in Umfangsrichtung in entgegengesetzte Richtungen ausgerichtet werden.

## Revendications

1. Méthode de fabrication d'une armature d'un générateur de courant alternatif pour automobile, caractérisée en ce qu'une bobine de stator est formée en conférant à un élément de bobine (10) une forme annulaire à plusieurs spires dans laquelle un certain nombre de parties en saillie et en retrait sont formées en alternance dans la direction radiale; en ce que ladite bobine de stator est séparée en deux bobines de stator de forme annulaire à plusieurs spires (20a, 20b) électriquement raccordées entre elles; en ce que l'une ou l'autre desdites bobines de stator de forme annulaire à plusieurs spires est retournée de 180°; en ce que les deux bobines de stator séparées (20a, 20b) sont disposées de manière à se chevaucher de sorte que chacune des parties en saillie de l'une des bobines de stator séparées corresponde à chacune des parties en retrait de l'autre bobine de stator séparée, et en ce que lesdites bobines de stator séparées sont insérées dans des encoches (21) formées dans un noyau de stator (2).

2. Méthode de fabrication d'un générateur de courant alternatif pour automobile selon la revendication 1, caractérisée en ce que des parties l'étendant radialement des deux bobines séparées (20a, 20b) de l'élément de bobine sont disposées dans lesdites encoches de telle manière que les parties constituant les extrémités de bobine et s'étendant à partir d'une même encoche ne se chevauchent pas mutuellement mais soient orientées circonférentiellement dans des directions opposées.

# FIGURE    I

# FIGURE    2

# FIGURE    3

# FIGURE 4

20a

20b

# FIGURE 5

20a

20b

# FIGURE 6

40

FIGURE 7

FIGURE 8